Europäisches Patentamt

European Patent Office

Office européen des brevets

(11) Publication number: **0 043 694**
**B1**

# (12) EUROPEAN PATENT SPECIFICATION

(45) Date of publication of patent specification: **12.02.86**

(21) Application number: **81302986.5**

(22) Date of filing: **01.07.81**

(51) Int. Cl.⁴: **B 01 D 46/10,** B 01 D 29/32,
B 01 D 39/20, B 01 D 53/36,
C 04 B 9/06, C 04 B 38/02,
C 22 B 9/02, F 01 N 3/02,
F 28 D 19/04

(54) Particulate filter and material for producing the same.

(30) Priority: **03.07.80 US 165391**
**03.07.80 US 165611**
**03.07.80 US 165646**
**03.07.80 US 165647**

(43) Date of publication of application:
**13.01.82 Bulletin 82/02**

(45) Publication of the grant of the patent:
**12.02.86 Bulletin 86/07**

(84) Designated Contracting States:
**BE CH DE FR GB IT LI NL SE**

(56) References cited:
**DE-A-2 248 359**
**FR-A-1 515 158**
**GB-A-1 511 045**
**US-A-3 346 121**
**US-A-3 419 937**
**US-A-3 533 753**
**US-A-3 634 111**
**US-A-3 885 977**

(73) Proprietor: **Corning Glass Works**
**Houghton Park**
**Corning New York 14831 (US)**

(72) Inventor: **Lachman, Irwin Morris**
**19 East Fifth Street**
**Corning New York (US)**
Inventor: **Frost, Rodney Irving**
**Powderhouse Road R.D. 2**
**Corning New York (US)**
Inventor: **Paisley, Robert John**
**17 Orchard Drive**
**Corning New York (US)**
Inventor: **Pitcher, Wayne Harold, Jr.**
**302 Green Valley Drive**
**Big Flats New York (US)**

(74) Representative: **Fentiman, Denis Richard et al**
**Elkington and Fife High Holborn House 52/54**
**High Holborn**
**London WC1V 6SH (GB)**

Courier Press, Leamington Spa, England.

**0 043 694**

**Description**

This invention relates to the filtering of solid particulates.

Removal of solid particulates from fluids—gases and/or liquids—in which the particulates are suspended is commonly done by use of filters. Generally filters are made of porous solid materials in the form of articles or masses with a plurality of pores extending therethrough (which may be interconnected) and having small cross-sectional size or minimum diameter such that the filters are: (1) permeable to the fluids, which flow through the filters from their inlet surface to their outlet surface, and (2) capable of restraining most or all of the particulates, as desired, from passing completely through the filters with the fluid. Such pores constitute what is termed "open porosity" or "accessible porosity". The restrained particulates are collected on the inlet surface and/or within the pores of the filter while the fluids continue to pass through those collected particulates and the filter. The minimum cross-sectional size of each of some or all of the pores can be larger than the size of some or all of the particulates, but only to the extent that significant or desired amounts of the particulates become restrained or collected on and/or within the filters during filtration of the fluids flowing through the filters. As the mass of collected particulates increases, the flow rate of the fluid through the filter usually decreases to an undesirable level. At that point, the filter is either discarded as a disposable/replaceable element or regenerated by suitably removing the collected particles off and/or out of the filter so that it can be reused.

Four general main considerations for useful filters are:

(1) filter efficiency: the amount of suspended particulates of concern in a given volume of fluid that are removed from that volume of fluid as it passes through the filter (usually expressed as a weight percentage of the total particulates of concern originally in that given volume of fluid prior to passing into the filter);

(2) flow rate: the volume of the fluid per unit of time that passes through the filter and collected particulates or, in a closed continuous feed system, the back pressure or increased pressure created in such system upstream from the filter by the presence of the filter and particulate collected thereon in comparison to what the pressure therein would have been in the absence of the filter;

(3) continuous operating time: the cumulative time of continued service of the filter before filter efficiency and/or flow rate/back pressure become unacceptable so as to necessitate replacement and/or regeneration of the filter; and

(4) compact structure: smallest space-saving volume and configuration of the filter for attaining the best combination of filter efficiency, flow rate/back pressure and continuous operating time.

For filtration of fluids at elevated temperatures, consideration must also be given to the filters having adequate mechanical and chemical durability under the prevailing conditions of temperature within the filter and chemical reactivity of the fluids and suspended particulates coming into contact with the filter.

The considerations noted above, especially the four general main ones, appear to be accommodated in varying degrees, but in less than fully satisfactory ways, by the following examples of prior art filters or incomplete filter suggestions:

U.S.A. Patents 2,884,091, 2,952,333 and 3,242,649 illustrate filters of the type made of pleated thin porous sheets of filter material whose layers are interleaved with corrugated or crimped spacers with the parallel corrugations or crimps thereof extending substantially perpendicular to the folds of the pleated sheets. In essence, fluid enters a complete layer or column of cells defined by a spacer and then passes through only the filter sheets on each side thereof (but not through corrugation or crimp segments of a spacer separating adjacent cells in that spacer) to effect filtration. Moreover, the corrugations involve cell-like passages whose transverse cross-sections have sinusoidal geometric shapes having small angle "corners" of substantially less than 30°.

British Patent Specification 848129 shows another form of the pleated-type filters wherein, instead of being interleaved with corrugated spacers, the thin porous sheets of filter material are impressed with spacer dimples to maintain spacing between the pleats.

U.S.A. Patent 3,346,121 discloses thin-porous-walled honeycomb filters of corrugated layer structure having crosswise oppositely indented portions that block end portions of the channels or passages in an alternating pattern within each layer (but not necessarily from layer to layer) to cause fluid therein to pass through the porous walls to effect filtration of the fluid. The corrugation pattern is such that the channels or cells have transverse, cross-sectional, geometric shapes with numerous instances of corners formed by small angles substantially less than 30°. Moreover, the layered structure involves numerous portions, where the layers adjoin each other, which are of double and sometimes triple layer or wall thickness.

U.S.A. Patent 3,533,753 describes catalyst bodies with layered networks of intersecting "capillary" channels which can function as a filter body for combustion exhaust gas dust or sedimented particles, which can be diesel engine exhaust soot or particulates as noted in U.S.A. Patent 4,054,417.

U.S.A. Patent 3,637,353 discloses a tubular packed bed of granular catalyst with fluid-flow interstices for filtering particulates from exhaust gases generated by diesel engines.

U.S.A. Patent 4,054,417 also suggests making the disclosed diesel exhaust filters of known materials used in heat exchangers for turbine engines or in monolith catalytic converters for automotive vehicles (e.g. as disclosed in U.S.A. Patent 3,112,184 as a corrugated structure and in U.S.A. Patent 3,790,654 as an extruded structure) as alternatives to and in a manner similar to the material in U.S.A. Patent 3,533,753 (i.e. with fluid flow passing into, through and out of every channel).

2

Research report EPA-600/2—77—056 of the U.S.A Environmental Protection Agency suggests that several commercially available thin-porous-walled ceramic monoliths of honeycomb appearance, both corrugated and extruded, are potential filters for diesel exhaust particulates. However, the only illustrated arrangement given therefor is the alternate layer cross-flow design of a corrugated monolith, with small corners less than 30° in transverse cross section, wherein the exhaust gas passes through only those thin walls between layers of cells or passages. This report also suggests the suitability of porous bonded masses of ceramic fibres for filters of diesel exhaust particulates.

British Patent Specification 1,440,184 discloses that porous bonded sheets of refractory metal oxide fibres can be formed into corrugated or embossed honeycomb structures for use in filtration of hot waste gases containing particulate matter and of molten metal prior to casting. As in cases noted above, the transverse cross-section of the corrugated embossed or structures contain numerous small angle corners much less than 30°.

U.S.A. Patents 3,893,917 and 3,962,081 describe ceramic foam filters for removing entrained solids or inclusion particulates from molten metals as those metals pass through the foam structure.

U.S.A. Patents 4,041,591 and 4,041,592 disclose thin-walled, honeycombed, multiple-fluid-flow-path bodies with all cells or passages parallel such that fluid entering each of the passages can continue through and pass out of the open exit end thereof without passing through any cell wall. Alternate selected columns or layers of cells have their ends sealed for advantageous separate manifolding to fluid conduits. An optical use indicated for these bodies is in filtration and osmosis when porous materials are used to form the honeycombed body so that some of the fluid flowing in a first set of cells can pass into an adjacent alternate set of cells through the thin porous walls between them while a remaining portion of the fluid with a higher concentration of an undesirable or separable constituent can continue through and pass out of the open exit end of the first set of cells. Examples of the latter use are reverse osmosis filtration and ultrafiltration of saline or impure water to produce potable or purified water, in which cases the surfaces of the porous walls defining the first set of cells are lined with suitable selectively permeable membranes.

DE—A—2248359 discloses a filtration assembly formed of consolidated particulate materials, for example of ceramic, and including a first plurality of longitudinally extending cells open at one face of a filtration body, and a second plurality of cells open at the opposite face thereof.

Attention is also drawn to EP—A—0036321, EP—A—0042300 and EP—A—0042302, being specifications of European applications filed, but not published, before the present application. These specifications disclose ceramic honeycomb filters, but it is noted that none of them discloses a particular relationship of volume of open porosity and mean pore diameter which is of significance in the present invention.

With the present invention, a filter body has been conceived for removing solid particulates from suspension in fluids and which is believed to provide a superior combination of satisfaction, especially with regard to all four main considerations noted above. When fabricated of inorganic (especially ceramic) material having incipient melting point above the elevated temperature of fluids to be filtered and of regeneration of the filter body, the superior combination of satisfaction includes regard to adequate mechanical and chemical durability under the prevailing filtration conditions with such hot fluids.

According to the present invention there is provided apparatus for filtering solid particulates from suspension in fluid streams, which comprises a filter of honeycomb structure having a matrix of thin porous walls defining a plurality of cells extending longitudinally and mutually parallel therethrough between inlet and outlet end faces of the structure, the walls containing substantially uniform interconnected open porosity of a volume and size sufficient to enable the fluid to flow completely through the walls and to restrain most or all of the particulates from passing completely through the walls, the transverse cross-sectional shapes of the cells forming a substantially uniformly repeating pattern of geometric shapes without interior corner angles of less than 30°, an inlet group of the cells open at the inlet end face and closed adjacent to the outlet end face, an outlet group of the cells closed adjacent to the inlet end face and open at the outlet end face, each cell of the inlet group sharing cell walls only with cells of the outlet group, and each cell of the outlet group sharing cell walls only with cells of the inlet group, characterised in that the volume of open porosity and the mean diameter of the pores forming the open porosity lie within the area defined by the boundary lines connecting points in a graph in which the abscissa is mean pore diameter in micrometers and the ordinate is percentage open porosity, the points having the coordinates (1, 58.5), (20, 33.0), (20, 52.5) and (1,90.0).

There are no small interior angle (<30°) corners in the transverse cross-sectional geometric shapes of the cells that inhibit full effective access to such filters by the fluid due to fluid flow patterns and particulate accumulation patterns effected by such shapes with small angle corners. When viewed from each of the inlet and outlet end faces of the filter, alternate groups of cell ends are open and closed in a chequered or chequerboard pattern, with the outlet end face pattern being the opposite of the inlet end face pattern.

Generally, the cell walls are not greater than about 1.5 mm (preferably maximum of about 0.635 mm) thick. The walls contain substantially uniform randomly interconnected open porosity of a volume and size sufficient to enable the fluid to flow completely through the walls and to restrain most or all of the particulates from passing completely through the walls. Preferably the open porosity is at least about 25% by volume formed by pores with a mean pore diameter (determined by conventional mercury-intrusion porosimetry) of at least about 3.5 µm. The transverse cross-sectional shapes of the cells form a substantially uniformly repeating pattern of geometric shapes without interior angles of less than 30° (preferably less than 45°). The inlet group of the cells is open at the inlet end face and closed adjacent to the outlet end face. The outlet group of the cells is closed to adjacent the inlet end face and open at the outlet end face. Each cell of the inlet group shares cell walls only with cells of the outlet group. Each cell of the outlet group shares cell walls only with cells of the inlet group.

The walls within each of a plurality of transverse sectors (e.g. annular or pie/wedge shaped) of the structure or throughout the structure should beneficially have substantially uniform thickness for substantially uniform filtration within the entirety respectively of such sectors or whole structure to maximize continuous operating time.

Transverse cross-sectional cell density within the structure should be generally at least about 1.5 cells/cm$^2$ (preferably at least about 7.75 cells/cm$^2$) for maximizing filter surface area within a compact structure.

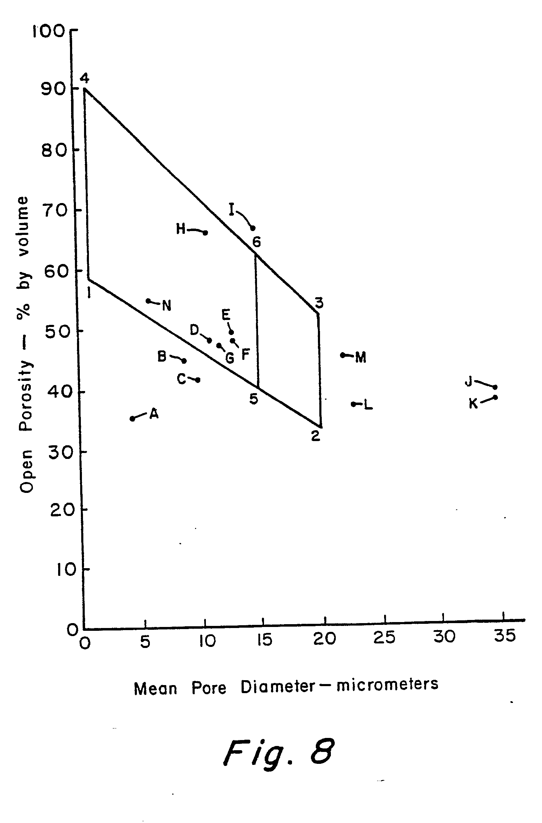

As will be apparent from the foregoing, the volume of interconnected open porosity in the walls and the mean pore diameter of the pores forming the open porosity lie uniquely within the area defined by the boundary line connecting points 1—2—3—4 in Figure 8 of the drawings. Preferably, they lie within the boundary line connecting points 1—5—6—4 in the same Figure. Such porosity and pore diameters are determined by conventional mercury-intrusion porosimetry.

As a further aspect of this invention, a cement is provided for bonding the aforedescribed products.

It was found that a foamable particulate ceramic cement capable of forming a sintered cordierite foamed ceramic mass can be made by seeding ceramic base material of controlled composition with cordierite grog of another controlled composition and adding thereto a foaming agent in an effective amount to effect foaming of the cement upon firing to produce the foamed ceramic mass.

This cement consists essentially, by weight, of 1—40% cordierite grog, 99—60% ceramic base material and foaming agent. The base material is raw ceramic material that has an analytical molar composition consisting essentially of about 1.7—2.4 MO · 1.2—2.4 Al$_2$O$_3$ · 4.5—5.4 SiO$_2$ wherein MO comprises, as mole % of MO, about 0—55% MgO and at least 45% MnO. The grog is ceramic material that has been previously fired and comminuted, and that has an analytical molar composition consisting essentially of about 1.7—2.4 RO · 1.9—2.4 Al$_2$O$_3$ · 4.5—5.2 SiO$_2$ wherein RO comprises, as mole % of RO, MnO in an amount of 0% up to a mole % that is about 20 mole % lower than the mole % of MO that is MnO and the balance is substantially MgO. Minor portions of MgO in either or both of MO and RO can be replaced by equal molar amounts of other oxides such as NiO, CoO, FeO and TiO$_2$ as noted in U.S.A. Patent 3,885,977, which is incorporated herein by reference. Foaming agent can be selected from a variety of substances that decompose to give off gas at about the foaming temperature of the cement, i.e. the temperature at which the grog and base material are in a softened condition adequate to be foamed by the gas. Among such substances are compounds such as carbides, carbonates, or sulphates, preferably of cations that are in the grog and/or base material. Silicon carbide is the preferred foaming agent and can be employed in any effective amount (usually at least 0.25 wt%) up to a practical amount of about 5% by weight of grog plus base material. Larger amounts can be employed without additional benefit, but they dilute the amount of ceramic in the foamed mass. Generally 1—2 wt% SiC (by weight of grog plus base material) is preferred.

To ensure thorough cordierite crystallisation in the foamed ceramic masses, it is advantageous for the grog in the cement to be at least 5 wt% and correspondingly for the base material to not exceed 95 wt%. Preferred proportions are 5—20 wt% grog and 95—80 wt% base material.

While the invention can broadly utilize base compositions within the aforesaid molar composition range embracing both the stoichiometric cordierite area and the nonstoichiometric eutectic cordiertie area, it is preferred to use base compositions of the generally stoichiometric type having an analytical molar composition consisting essentially of about 1.7—2.4 MO · 1.9—2.4 Al$_2$O$_3$ · 4.5—5.2 SiO$_2$ wherein MO is as previously stated. Most preferably, such molar composition is about 1.8—2.1 MO · 1.9—2.1 Al$_2$O$_3$ · 4.9—5.2 SiO$_2$ and MO is wholly MnO.

The requisite minimum difference of about 20 mole % for MnO in MO and RO provides the grog with adequately higher melting point vis a vis melting point of the base material so as to insure proper cordierite crystallisation seeding effect by the grog at foaming temperature. To enhance such effect, it is preferred to have MO of the base composition comprise not more than about 15 mole % MgO.

The most preferable grog has an analytical composition of about 1.8—2.1 RO · 1.9—2.1 Al$_2$O$_3$ · 4.9—5.2 SiO$_2$, and RO comprises 8—12 mole % MnO and the balance MgO.

If desired, optional customary fluxes may be included in the cement in minor amounts up to 5 wt% or so of the grog plus base material. Such fluxes are illustratively disclosed in U.S.A. Patents 3,189,512 and 3,634,111, which are incorporated herein by reference.

The present invention also encompasses ceramic structures embodying the novel sintered cordierite foamed ceramic mass and the method providing such mass in the structures. The structure broadly comprises at least two closely spaced cordierite ceramic surfaces having the mass in the space between and bonded to those surfaces. In the method, the cement is disposed between such surfaces, then the structure with the cement so disposed is fired to foaming temperature in the range of about 1160—1325°C and thereafter cooled with the cement converted to the foamed ceramic mass. Preferably the foaming temperature is in the range of 1170—1250°C, especially for attaining foamed ceramic mass that is substantially impervious to fluids. Lower temperatures fail to develop an adequate foaming of the cement.

Also, it is desirable to fire to the foaming temperature at an average rate of at least about 100°C per hour (preferably at least about 200°C per hour) to avoid the possible adverse effect of much slower (e.g. 50°C/hr.) heating rates that may cause loss of foaming agent gas before the ceramic constituents of the cement are soft enough to be foamed.

In the accompanying drawings:

Figure 1 is a partially broken away, oblique view of a preferred embodiment of a filter body according to the present invention.

Figure 2 is a sectional view taken in each plane indicated by each of the line and arrows A—A and the line and arrows B—B of Figure 1.

Figures 3—6 inclusive are views of the end faces of four alternative embodiments of filter bodies according to the present invention, which bodies have different transverse cross-sectional cell geometries or shapes.

Figure 7 is a longitudinal sectional view through a filter apparatus according to the present invention for filtration of particulates from diesel engine exhaust gas.

Figure 8 is a graphical representation of the combined open porosity and mean pore size of filters according to the present invention. It includes, as the best mode of carrying out the present generic invention with respect of filters in diesel engine exhaust conduits or systems, an indication of unique combinations of open porosity and means pore size, within area 1234 of such filters.

Figure 9 is a longitudinal sectional view through a filter chamber according to the present invention for filtration of particulates or entrained solids from molten metals.

Figure 10 is a schematic illustration of a rotatable heat exchanger or heat recovery wheel assembly with filter structure according to the present invention.

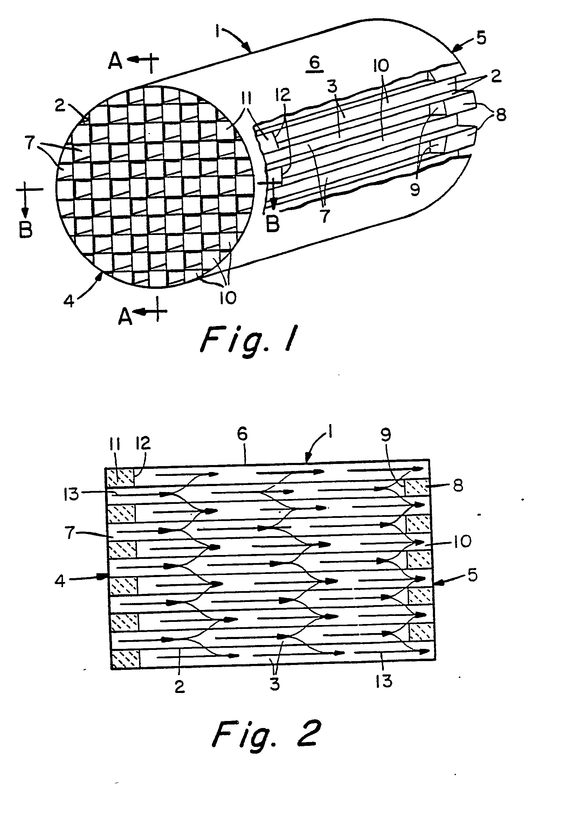

The filter body 1 shown in Figure 1 comprises a cellular or honeycomb structure (monolith) which has a matrix of intersecting, uniformly thin walls 2 defining a plurality of cells 3. The cells 3 extend longitudinally and mutually parallel through the body 1 between the inlet end face 4 and the outlet end face 5. Ordinarily the body 1 also has a peripheral wall or skin 6. An inlet group of alternate cells 7 are open at the inlet end face 4 and are closed, sealed or plugged with closure means 8 adjacent outlet end face 5. Means 8 can be a sealant or cement mass adhering to walls 2 and extending from face 5 a short distance inwardly to end face 9 of means 8. The other alternate cells 10 form an outlet group and are open at outlet end face 5, but they are similarly closed adjacent inlet end face 4 by closure means 11, which likewise extend inwardly a short distance from face 4 to end face 12 of means 11. Thus, as viewed at end faces 4 and 5, the alternating open and closed cells are in a chequered or chequerboard pattern.

Body 1, including means 8 and 11, can be made of any suitable materials such that walls 2 have the requisite interconnected open porosity therein and means 8, 11 are generally impermeable to fluids. Such materials may include ceramics (generally crystalline), glass-ceramics, glasses, metals, cermets, resins or organic polymers, papers or textile fabrics (with or without fillers), and combinations thereof. For walls 2 and skin 6, it is preferred to fabricate them from plastically formable and sinterable finely divided particles and/or short length fibres of substances that yield a porous sintered material after being fired to effect sintering thereof, especially ceramics, glass-ceramics, glasses, metals and/or cermets. As desired (besides volatizable plasticizers/binders for the formable particle batch or mixture), any suitable or conventional fugitive or combustible (burn-out) additive can be dispersed within the formable and sinterable mixture so as to provide appropriate and adequate open porosity in the sintered material of walls 2. Moreover, the requisite open porosity can also be designed into walls 2 by raw material selection as described in U.S.A. Patent 3,950,175.

The body 1 can be fabricated by any suitable technique. It (without plugs 8 and 11) is made preferably by extrusion of a sinterable mixture in the manner as disclosed in U.S.A. Patents 3,790,654, 3,919,384 and 4,008,033. Such extruded green honeycomb body is then fired for effecting the sintered condition thereof in the manner as disclosed in U.S.A. Patent 3,899,326.

Plug means 8, 11 can then be formed in the sintered monolith 1 by injecting a sinterable or other suitable sealant mixture into the appropriate ends of the cells 3. For example such mixture can be injected by means of a pressurized air actuated sealant gun whose nozzle can be positioned at the proper cell openings on the end faces 4, 5 so as to extrude the mixture into and to plug the end portions of the cells. An appropriate assembly and positioning of an array of sealant nozzles of such gun(s) can be used to inject the plug mixture simultaneously in a plurality of all of the alternate cells at each face 4, 5 for efficient production. Upon subsequent firing of the body 1 after having been plugged with a sinterable or other heat-setting mixture, there results rigidified closure masses 8, 11 which are adherently bonded to adjacent portions of walls 2. These plugs 8, 11 are substantially nonpermeable to the fluid to be passed through filter 1.

If so desired, the monolith 1 need not necessarily be fired or sintered before injecting sealant mixture, especially ceramic cement, into the ends of the cells 3. For example, monolith 1 can be made of ceramic material having a firing temperature that is substantially the same as or closely similar to the firing or foaming temperature of an appropriately selected ceramic cement. In that case, the cement can be injected into the cell ends while the monolith is in the unfired or greenware state. Thereafter the green monolith with green cement plugs is fired to suitable temperature or temperatures within the appropriate range to effect sintering of the monolith and of the cement (including foaming thereof if that is a characteristic of it).

Figure 2 shows the pattern of fluid flow through filter 1 in both a vertical column of cells 3 (in plane A—A of Figure 1) and a horizontal column of cells 3 (in plane B—B of Figure 1). Fluid flow is indicated by the lines 13 with arrows. Thus, fluid 13 passes into inlet cells 7 from inlet end face 4, but because of the blocking effect of end faces 9 of plugs 8, the fluid under some pressure then passes through the pores or open porosity in cell walls 2 at top, bottom and both sides of the cells 7 so as to respectively enter outlet cells 10 above, below and on both sides of each cell 7. While fluid 13 passes through the entirety of all cell walls 2, their porosity is such as to restrain particulates therein and thereon as a porous accumulation (which may even fill up all of cells 7 before replacement or regeneration of the filter 1). It can be seen that the entirety of all cell walls 2 act as filters for unique superior filter capability. The fluid 13 passing into cells 10 then flows out of these cells at the outlet end face 5, since the end faces 12 of plugs 11 adjacent the inlet end face 4 prevents the fluid from reversing direction. Also, plugs 11 prevent fluid 13 from directly entering cells 10 without first going into cells 7 and through walls 2.

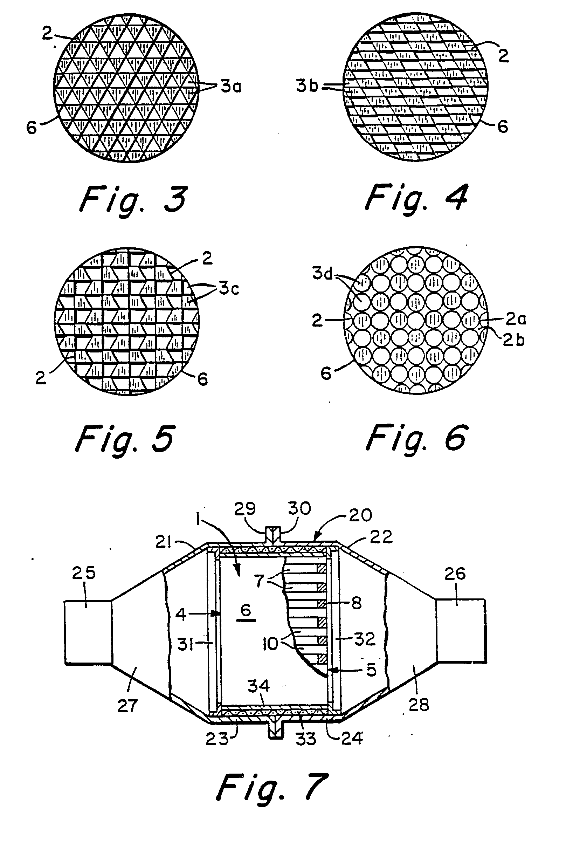

While it is preferred to make the transverse cross-sectional geometry of the cells 3 to be squares as shown in Figure 1, any other suitable geometries may be employed. Examples of such other geometries are shown in Figures 3—6. In Figure 3, cells 3a are in the transverse geometrical form of equilateral triangles, but they could also have the form of right triangles. Figure 4 shows cells 3b with transverse cross-sectional geometry of rhomboids, which could optionally be made as rhombuses. Similarly, rectangles can form the transverse cell geometry instead of squares. A less easily manufactured transverse cell geometry is shown in Figure 5, which constitutes a repeating pattern of quadrilaterals of cells 3c. In each of these polygonal shapes, intersecting walls 2 preferably form included angles that are not less than 60° to avoid the non-uniform accumulation of particulates in smaller angle corners and to enable proper complete plugging of the alternate cells adjacent end faces 4, 5. Also, it may be desirable for enhanced mechanical strength of the honeycomb filter bodies that the cell corners be filleted or slightly filled in with the same or similar material as forms cell walls 2. That latter concept can be extended to a presently lesser desirable form as shown in Figure 6, wherein cell 3d have a circular transverse geometry. The walls 2 have a substantially uniform thickness throughout in that they substantially uniformly vary from their thinnest portions 2a to their thicker (or maximum filleted) portions 2b. Another alternative to the latter one would be eliptical transverse cell geometry. If it is desired for certain purposes, the filter body can be made with a plurality of transverse sectors (e.g. annular or pie/wedge shaped) whereby the transverse cell cross-sectional areas are larger in a sector or sectors than such areas are in another sector or sectors. It is even conceivable that repeating patterns of different transverse geometric cell shapes can be employed in different transverse sectors.

In all variations of the filter body with respect of transverse cell geometry, alternate cells are plugged adjacent each end face in a chequered style pattern such that those cells plugged at the inlet end face are open at the outlet end face and vice versa. Also, the transverse cross-sectional areas of such cells are desirably sized to provide transverse cell densities in the range of about 2—93 cells/cm$^2$. Correspondingly, it is desirable to make the thin walls with thickness in the range of about 0.05—1.27 mm.

One embodiment of the present invention is a filter apparatus for removing carbonaceous particulates from diesel engine exhaust gas so as to avoid air pollution by such particulates, which individually can range in size from about 5 micrometers down to and below 0.05 micrometer. Figure 7 shows an exemplary form of such apparatus, which comprises the filter body 1 held within a container or can 20. Body 1 is the same as that shown in Figure 1, with skin 6, inlet cells 7 extending from inlet end face 4 and blocked by plugs 8, and outlet cells 10 open at outlet end face 5. Can 20 is similar to a conventional type of can (see U.S.A. Patent 3,441,381) employed for mounting catalytic converter honeycomb substrates in exhaust systems of internal combustion engines. The can 20 comprises two parts 21, 22 respectively formed of filter-holding portions 23, 24, conduit-connectors 25, 26, conical portions 27, 28, respectively joining connectors 25, 26 to portions 23, 24 and mating flanges 29, 30 which are mechanically fastened together (e.g. by bolts and nuts not shown) to keep the can properly assembled for use and so as to be capable of being unfastened in order to open the can 20 for replacement of filter body 1. Internal annular mounting members 31, 32 of L shaped cross-section are respectively fastened to portions 23, 24 so as to respectively abut against faces 4, 5 and hold body 1 in its proper fixed axial position within can 20. To cushion body 1 against mechanical shock and vibration, it is ordinarily desirable to surround body 1 with a wrapping or mat 33 of metal mesh, refractory fibre and the like, which may fill the annular space between body 1 and portions 23, 24. To minimize heat loss from body 1 and excessive heating of portions 23, 24, a layer of insulating material 34, such as glass or mineral wool mat, may also be wrapped around body 1.

Connectors 25, 26 are suitably fastened (e.g. by welding or gasketed mechanical coupling) to exhaust gas conduits of a diesel engine. While can 20 can be located in and form part of the exhaust gas conduit some distance down-stream for the engine exhaust manifold, it can desirably be located near or at the exit from the exhaust manifold. The latter arrangement facilitates regeneration of filter body 1 by utilizing the higher temperature of the exhaust gas upon exiting the exhaust manifold to cause, with excess air in the gas, the combustion of carbonaceous particulates restrained in body 1 to form further gaseous combustion products that can then pass on through and out of body 1 for emission through connector 26 to the tailpipe (not shown) fastened to connector 26. If desirable (especially when can 20 is located downstream along the exhaust conduit some distance from the exhaust manifold), a combustion ignition device may be positioned in can 20, such as a glow plug in conical portion 27 or an electric heater within the central axis of body 1 (similar to the device of U.S.A. Patent 3,768,982), and secondary air may be injected into can 20 upstream from body 1 to assist in regeneration of body 1 without removing it from can 20. Additionally, catalyst substance can be placed on and in walls 2 of body 1 (similar to catalytic converter honeycomb substrates) to facilitate regeneration of combustion in body 1. In ordinary usage, frequent higher speed or rpm of the diesel engine can contribute sufficient heat (e.g. 400—500°C or higher) to cause repetitive regeneration combustion of body 1 without requiring the can 20 to be opened often for replacement of body 1. Nevertheless, removed bodies 1 can be reverse flushed with air to blow much of the particulates out of it into a collector bag and then fully regenerated by high temperature air passed through it before reinstalling in can 20.

In a further embodiment of the invention, the volume of interconnected open porosity and the mean diameter of the pores forming the open porosity lie within the area defined by the boundary lines connecting points 1—2—3—4 in Figure 4 of the drawings.

In a preferred embodiment, the walls are not more than about 1.5 mm thick, the volume of interconnected open porosity and the mean diameter of the pores forming the open porosity lie within the area defined by the boundary lines connecting point 1—5—6—4 in Figure 4 of the drawings, and the structure for a transverse cross-sectional cell density of at least about 1.5 cells/cm$^2$.

In further advantageous embodiments, the walls are not less than about 0.3 mm thick, even more preferably not more than about 0.635 mm thick, and the cell density is at least about 7.75 cells/cm$^2$.

Examples

Cordierite ceramic materials of the type disclosed in U.S.A. Patents 3,885,977 and 4,001,028 are generally preferred for diesel particulate trap filters because, as was earlier found for their use as catalyst substrates in internal combustion engine exhaust systems, these materials have properties that enable them to withstand and be durable under the thermal, chemical and physical conditions to which they are subjected in such systems including those of diesel engines. A series of filter honeycomb samples with square cross-section cells were extruded of cordierite batch compositions as set forth in Table 1. Those samples were then dried and fired generally in accordance with the following typical firing schedule:

80°C to 1425°C within about 60 hours.
Hold about 10 hours at 1425°C.
Cool 1425°C to room temperature within about 24 hours.

TABLE 1
Batch compositions—weight % of total ceramic & graphite raw materials

| Raw materials[a] | Samples | | | | | |
|---|---|---|---|---|---|---|
| | A | B-C | D-E-F-G-H | I-J-K | L-M | N |
| Georgia-Kaolin hydrite MP clay (APS 9.7) | 25.15 | 20.96 | 19.31 | 20.96 | 20.96 | 19.70 |
| Georgia-Kaolin glomax LL clay (APS 1.9) | 21.17 | 17.64 | 16.35 | 17.64 | 17.64 | 16.58 |
| Pfizer MP 96—28 talc (APS 20) | 40.21 | 33.51 | 30.85 | 33.51[d] | 33.51[e] | 31.49 |
| Alcoa A-2 alumina (APS 5.8) | 13.47 | 11.22 | 10.46 | 11.22 | 11.22 | 10.54 |
| Asbury 4012 graphite[b] | — | 16.67 | 23.03 | 16.67 | 16.67 | — |
| Asbury A-99 graphite[c] | — | — | — | — | — | 21.69 |
| Methyl cellulose binder/plasticizer | 4.0 | 4.0 | 4.0 | 4.0 | 4.0 | 4.0 |
| Alkali stearate extrusion aid | 0.5 | 0.5 | 0.5 | 0.5 | 0.5 | 0.5 |
| Distilled water plasticizer | 32.5 | 31.0 | 30.5 | 26.5 | 28.0 | 34.0 |

[a]APS means average particle size in micrometers
[b]Particle size (wt.%): 1.4% +120 U.S. Std. mesh (125 μm), 21.1% — 120+140 U.S. Std mesh (106—125 μm), 63.9% —
140+200 U.S. Std mesh (75—106 μm), 13.6% −200 U.S. Std. mesh (75 μm) (U.S. Std. Sieve)
[c]Particle size (wt.%): 97% −325 U.S. Std mesh (45 μm)
[d]Only +150 U.S. Std mesh (100 μm) screened fraction
[e]50 wt.% unscreened portion plus 50 wt.% +150 U.S. Std. mesh (100 μm) screened fraction.

The walls of the as-fired samples had typical open porosity and mean pore diameters as set forth in Table 2, which varied among the samples with particular relation to variation in the graphite (as burn-out material) and talc used in the batch compositions.

### TABLE 2

| Samples | Open porosity volume % | Mean pore diameter micrometers |
|---------|------------------------|-------------------------------|
| A | 35 | 4 |
| B | 44.5 | 9 |
| C | 41.3 | 10 |
| D | 48.0 | 11 |
| E | 48.5 | 13 |
| F | 47.7 | 13 |
| G | 46.8 | 12 |
| H | 65.6 | 11 |
| I | 65.8 | 15 |
| J | 38.8 | 35 |
| K | 37.2 | 35 |
| L | 36.7 | 23 |
| M | 44.7 | 22 |
| N | 54.6 | 6 |

Plugs were formed in the end portions of alternate cells, as previously described, of the sintered samples by injecting a plastically formable ceramic cement into such cell ends with an air-operated sealant gun. The amount of plugging cement injected into the cell ends was controlled by measuring the time that operative air pressure was applied to the sealant gun. By this means, the cement plugs were generally made with a depth or length into the cell from an end face thereof in the range of about 9.5—13 mm.

A preferred plugging cement employed with the foregoing samples was the manganese-magnesium cordierite foam type of this invention. In particular, the preferred foam cement used in the above-noted samples had the batch composition in accordance with Sample 6 of Table 10 further below. The previously fired samples with the injected cement plugs were then fired generally in accordance with the following. The Mn-Mg cordierite grog in the cement batch was the dense cordierite containing manganese in accordance with the present invention. In particular, the grog was made of the following batch composition (in weight % of the total ceramic raw materials):

| | |
|---|---|
| Sample A grog (−200 mesh) (75 µm) | 84.48 |
| Georgia-Kaolin kaopaque 10 clay (APS 10) | 10.00 |
| Baker $MnCO_3$ powder | 4.15 |
| Penn. glass sand minusil silica (APS 5) | 0.78 |
| Pfizer MP 95—28 talc (APS 20) | 0.59 |
| Methyl cellulose binder/plasticizer | 4.0 |
| Alkali stearate extrusion aid | 0.5 |
| Distilled water plasticizer | 26.0 |

This Mn-Mg cordierite grog was fired generally in accordance with the same firing schedule as for Sample A, except that the maximum temperature was 1405°C instead of 1425°C.

The previously fired samples with the injected cement plugs, as noted above, were fired generally in accordance with the following typical firing schedule:

Room temperature to 1210°C within about 6 hours.

Hold about 30 minutes at 1210°C.

Cool 1210°C to room temperature within about 18 hours.

The cement foamed during firing to develop good sealing to the cell walls and generally fluid impervious plugs. The foaming action counteracts normal drying and firing shrinkage of an otherwise nonfoaming ceramic cement.

While the previously mentioned foam cement is preferred for forming the plugs, other suitable foaming and non-foaming ceramic cements may be used. Even non-ceramic cements or sealants may be used if they are capable of being durable under exhaust system conditions of heat as well as chemical and physical abuse.

The filter samples made as described above, and having various cell densities, wall thicknesses and external dimensions (diameter and length), were tested in the exhaust system of a 1980 Oldsmobile 350 CID (cubic inch displacement) diesel V-8 engine operated with a water brake dynomometer at constant conditions of speed and load. A driveshaft speed of 1000 rpm was used, which was equivalent to a vehicle road speed of 40 mph (64 km per hr.) A load of 100 ft-lbs (approx. 136 joules) torque was used, which was equivalent to higher than basic vehicle road load at steady 40 mph (64 km per hr.) speed on a horizontally level road surface. This higher than basic road load provided more realistic exhaust particulates volume per unit time with respect to the fact that actual or commonly experienced road loads are ordinarily higher than basic road loads because of fluctuations in acceleration and variations in road surfaces from the level condition. The engine was warmed up to normal operating temperature before beginning the tests of the filter samples.

The filter cans were located about 2.1 metres downstream from the engine exhaust manifold. Exhaust gas flow rate through each filter placed in the can (from only four engine cylinders) was approximately constant in the range of about 1.0—1.1 cubic metres per minute. Back pressure caused by (or pressure drops across) the filter samples were measured by water manometer and were monitored during the tests from an initial level up to the time they rose to 137.3 mbar (140 cm of water), at which time the tests were discontinued because higher back pressure has been determined by the engine manufacturer to be unacceptable for proper engine operation. Thus, when the pressure drop across the filter reaches 137.3 mbar (140 cm of water), the filter has attained its maximum effective filter capacity in a single operation in the noted system. The total time from the beginning of the test (with the exhaust gas started through the filter) until the filter back pressure becomes 137.3 mbar (140 cm of water) is referred to as the Operating Time of the filter.

Exhaust gas samples were taken downstream of the filter can. Without any filter in the can, the amount of particulates in the total unfiltered exhaust gas (in terms of grams per mile or g/mi.) were calculated from the amount of particulates measured in an unfiltered gas sample. This amount of particulates—called the Baseline Particulates—was found to have negligible variation over a range of back pressures exerted on the system up to 137.3 mbar (140 cm of water). The Baseline Particulates ranged between 0.17 g/mi. and 0.24 g/mi. in the various tests. With a filter in the can, the amount of Residual Particulates in the total filtered exhaust gas (in terms of g/mi.) were calculated from the amount of particulates measured in a filtered gas sample. The difference between the Baseline Particulates and the Residual Particulates as a percent of the Baseline Particulates is referred to as the calculated Filter Efficiency. Incidentally, the Filter Efficiency in terms of the weight gain of the filter during a test (i.e. the gain over the initial untested filter weight) as a percent of the Baseline Particulates for the same test agreed closely with the above-noted calculated Filter Efficiency.

Table 3 sets forth the initial pressure drop, Operating Time and Filter Efficiency for a series of tested filter samples having a square cell density of 15.5 cells/cm$^2$, external dimensions of about 9.3 cm diameter and 30.5 cm length, and wall thickness as indicated in that table. In most cases for a given wall thickness, two filters of the same sample honeycomb body were tested.

# 0 043 694

## TABLE 3

| Wall thickness mm | 0.305 | 0.432 | 0.635 |
|---|---|---|---|
| Initial pressure drop (cm of water) (1 cm $H_2O$=0.98 mbar) | | | |
| Sample B | 30.2/14.2 | 35.0/34.5 | 39.8/34.5 |
| Sample D | 29.4/24.8 | 28.2 | 40.5/29.7 |
| Sample H | 24.6/20.9 | 20.0/16.3 | 30.1 |
| Sample I | — | 11.6/10.0 | — |
| Sample J | 6.2/7.3 | — | 15.7/16.8 |
| Sample K | 8.1/8.0 | 9.5/9.9 | 17.4/17.6 |
| Sample L | 12.7 | 19.0/17.2 | 24.0/21.3 |
| Sample M | 11.0/11.7 | 29.0/23.7 | 23.4/21.7 |
| Sample N | 20.8/23.7 | — | 28.6/27.9 |
| Operating time (hours) | | | |
| Sample C | 2.01/2.20 | 2.39/2.04 | 1.18/1.48 |
| Sample D | 3.40/3.8 | 3.17 | 1.89/2.3 |
| Sample H | 3.60/5.0 | 3.20/4.30 | 3.30 |
| Sample I | — | 4.50/4.90 | — |
| Sample J | 18.00/16.6 | — | 5.90/4.30 |
| Sample K | 8.80/11.3 | 5.40/5.70 | 2.17/3.00 |
| Sample L | 6.00 | 1.80/2.16 | 1.32/1.55 |
| Sample M | 7.80/8.50 | 2.67/3.00 | 1.39/1.78 |
| Sample N | 3.50/3.60 | 3.00/3.30 | 2.40/2.60 |
| Filter efficiency (%) | | | |
| Sample B | — | 91.3/95.0 | — |
| Sample C | 95.9/96.0 | 95.8/97.8 | 97.0/88.2 |
| Sample D | 94.6/95.3 | 96.0 | 94.6/95.0 |
| Sample H | 84.3/80.9 | 86.8/89.0 | 87.0 |
| Sample I | — | 69.7/60.1 | — |
| Sample J | 51.2/41.3 | — | 64.0/62.6 |
| Sample K | 57.5/46.4 | 66.8/62.3 | 78.1/77.6 |
| Sample L | 67.8 | 85.8/86.1 | 85.3/89.4 |
| Sample M | 66.8/70.3 | 87.0/84.9 | 88.4/87.6 |
| Sample N | 96.3/96.2 | 98.0/97.0 | 98.3/98.8 |

11

**0 043 694**

Preferred as the most practical filters, based on the foregoing tests, are those which have an average Filter Efficiency of at least 75% and a minimum average Operating Time of three hours. The data of Table 3 show samples D, H and N to fit this preferred category (except for samples D and N with wall thickness of 0.635 mm), which is more generally defined in Figure 8 by the area 1234 and by the most preferred area 1564 (represented by the boundary lines connecting those numbered points with coordinate values as follows):

| | Coordinates | |
|---|---|---|
| Point | Open porosity % | Mean pore diameter μm |
| 1 | 58.5 | 1 |
| 2 | 33.0 | 20 |
| 3 | 52.5 | 20 |
| 4 | 90.0 | 1 |
| 5 | 39.5 | 15 |
| 6 | 62.0 | 15 |

Thus, the preferred category of filters for diesel exhaust systems have an optimum balance of open porosity and mean pore diameter.

The preceding test data also show a tendency for reduced Operating Time when maximizing Filter Efficiency in filters of a given external size and cell density. However, it has been found that Operating Time is directly proportional to the filter surface area. To avoid compromise of Filter Efficiency, Operating Time can be increased by increasing cell density and/or external size.

The test data of Table 4 (derived from the same test previously described) illustrate the effect of increasing cell density and of increasing external size on Operating Time of the filters with wall thickness of 0.305 mm and a diameter of about 9.3 cm. Typical initial back pressures of those filters with square cell densities of 31 and 46.5 cells/cm$^2$ were respectively 13.8/10.3 and 15.4 mbar (14.1/10.5 and 15.7 cm of water). Like Sample D, Samples E and F also are within the preferred category of filters indicated by Figure 8. While no actual test data was obtained for a Sample F filter with more than 1 m$^2$ of filter surface area, it is evident from the presented data that such larger Sample F filter would have an Operating Time in excess of three hours.

TABLE 4

| Sample | Cell density cells/cm$^2$ | Filter length cm | Filter surface area m$^2$ | Filter efficiency % | Operating time hours |
|---|---|---|---|---|---|
| D | 15.5 | 15.2 | 0.63 | 94.9* | 0.65* |
| E | 31.0 | 15.2 | 0.74 | 94.9 | 1.67 |
| F | 46.5 | 15.2 | 0.98 | 91.8 | 2.43 |
| D | 15.5 | 30.5 | 1.34 | 95.0* | 3.6* |
| E | 31.0 | 30.5 | 1.79 | 95.2 | 5.0 |

*Average of two tests

A further illustration of larger filter surface area providing greater Operating Time is the test results with a Sample D filter having a square cell density of 15.5 cells/cm$^2$, a diameter of about 14.4 cm, a length of about 30.5 cm and wall thickness of about 0.432 mm. Its filter surface area was 3.03 m$^2$. The filter had an initial back pressure of 2.9 mbar (3.0 cm of water). It exhibited a Filter Efficiency of 79% and an Operating Time of 23.1 hours.

The tested filter samples were examined for the condition of accumulated particulates that generally completely filled such filters. No significant differences in the amount of particulates were seen with respect to varying radial and axially positions in the filters. These results are believed to be in significant part due to lack of lower angle corners in the geometric transverse square shapes of the cells in those filter samples. Further, the packed densities of the accumulated particulates were estimated to be relatively

12

constant throughout the filter samples—being in the range of 0.05—0.06 g/cm³ for samples with about 9.3 cm diameter and 30.5 cm length and about 0.09 g/cm³ for the sample with about 14.4 cm diameter and 30.5 cm length.

Moreover, it was observed that the accumulation of particulates in the filter samples has a three-stage effect on filter pressure drop. The first stage involves a fairly substantial steady rise in pressure drop. It is followed by a second stage during which the pressure drop rises at a much lower rate. Finally, in a third stage (apparently when fluid flow paths through the accumulated particulates are being fully blocked), the rise in pressure drop accelerates again to a much higher rate. All three stages can usually be observed in the larger samples with 14.4 cm diameter and 30.5 cm length. However, the smaller samples often showed only either the first and second stages or the first stage before the pressure drop reached 137.3 mbar (140 cm of water).

The effects of lower cell density were demonstrated with Samples G of filters having square cell density of about 7.75 cells/cm² and wall thickness of about 0.635 mm. Their approximate external dimensions and test results are set forth in Table 5. Those results show that lower cell density tends to decrease Operating Time because of lower filter surface area, but that such tendency can be offset by employing larger external dimensions. As indicated in Figure 8, Sample G is also within the preferred category of filters.

TABLE 5

| Diameter cm | Length cm | Filter efficiency-% | Operating time hours |
|---|---|---|---|
| 9.3 | 30.5 | 95.0 | 1.35 |
| 9.3 | 30.5 | 96.4 | 1.73 |
| 14.4 | 29.8 | 93.3 | 14.7 |

A Sample A filter was also made with cell density of about 7.75 cells/cm², wall thickness of about 0.635 mm, diameter of about 14.9 cm and length of about 17.8 cm. It had a fairly high initial pressure drop indicative of providing too little Operating Time. However, improved Operating Time could be obtained with Sample A filters by increasing cell density and/or external dimensions.

Molten metal filters

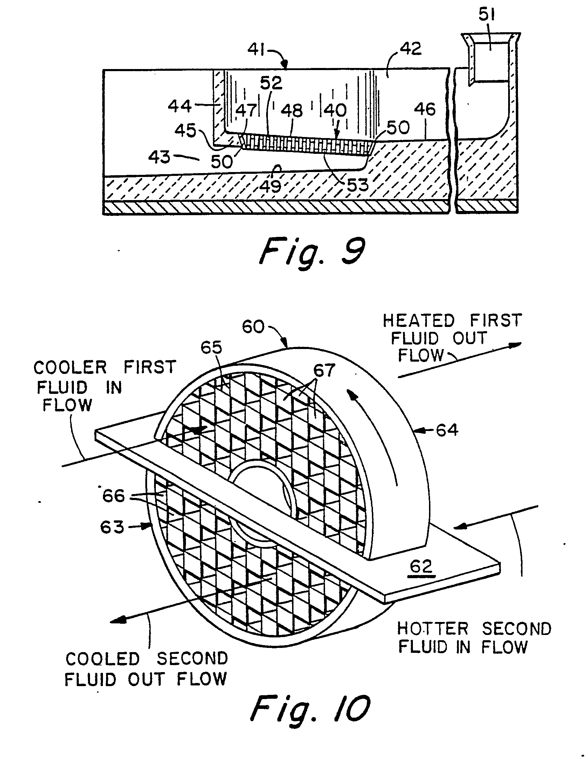

Another embodiment of the present invention is a filter apparatus for removing entrained solid particulates from molten metal (e.g. aluminum) prior to casting it into a solid body or ingot and so as to avoid defects in the cast metal products caused by such particulates trapped herein. Such particulates can be of the individual size order of 10—20 micrometers. Figure 9 shows an exemplary form of such apparatus, which comprises the filter body 40 (of the type shown in Figures 1 and 2) held within a molten metal filtration chamber 41 (of the type disclosed in U.S.A. Patent 4,024,056, which is incorporated herein by reference). Chamber 41 comprises an inlet portion 42 and an outlet portion 43 separated by an intermediate refractory wall 44. Wall 44 joins with a base portion 45 connected to and forming part of floor 46 of inlet portion 42. Portion 45 contains an aperture 47 for passage of molten metal from the inlet portion 42 into outlet portion 43. Filter 40 is interposed across aperture 47 such that the inlet face 48 of filter 40 (which corresponds to inlet face end 4 of filter body 1 in Figures 1 and 2) faces upstream of the molten metal flow path through aperture 47, viz, into inlet portion 42. Outlet portion 43 has a floor 49 which is lower than inlet floor 46 to facilitate flow of molten metal through aperture 47 via the filter 40. Conventional sealing means 50 replaceably holds and seals filter 40 within aperture 47 so that all of the molten metal passes through filter 40 from inlet portion 42 to outlet portion 43 and that, when it becomes substantially filled and clogged with entrained solids, filter 40 can be readily replaced with a new like filter. Thus, unfiltered molten metal enters inlet portion 42 via pouring spout 51 and the filtered metal exits from filter 40 into outlet portion 43. Filter 40 has plugs 52 and 53 in alternate cell ends respectively adjacent to the inlet and outlet faces of the filter in the same manner as shown in Figures 1 and 2.

As an example of this embodiment of the present invention, a molten aluminum filtration chamber is employed in a modified form from that described above to contain a filter, between inlet and outlet portions of the modified chamber which has a diameter of about 14.6 cm and a length of about 15.2 cm. The filter is like that of Sample C with square cell density of about 7.75 cells/cm and wall thickness of about 0.635 mm. Upon completion of a casting run, this filter is removed and discarded, and then replaced with a new like filter.

Preferably the above-described filter is made of thermal shock resistant, microcracked type of ceramics having good corrosion/erosion resistance to molten aluminum in addition to the requisite porosity in the walls of the filter. Such ceramics include zirconia-spinel ceramics, aluminum titanate based ceramics, etc., with a particularly desirable one being, by weight, 60% zirconia phase and 40% magnesium aluminate spinel phase.

A further embodiment of the present invention is a heat exchange assembly involving a rotatable honeycomb heat recovery (or exchange) wheel for absorbing heat from one fluid stream and imparting such heat to another fluid stream. According to the present invention, the conventional heat recovery wheel is modified to additionally act as a filter of particulates suspended in such fluids. Figure 10 schematically shows the conventional assembly with the heat recovery wheel 60 in modified form (similar to filter body 1 of Figures 1 and 2) to function as a filter as previously described. Wheel 60 rotates within and across two fluid flow paths within a heat exchange chamber and separated by conventional rubbing seal and duct structure 62. As shown, a first fluid passes sequentially through a pair of ducts (as indicated by arrows) with the wheel 60 interposed between those ducts and their fluid flow paths. The cooler first fluid passes from one duct into the slowly rotating honeycomb wheel 60, absorbs heat from the wheel as it passes through it and then continues as heated first fluid flowing through the second duct downstream of the wheel 60. A second fluid passes sequentially through another pair of ducts (as indicated by arrows) with the wheel 60 interposed between those ducts and their fluid flow paths. The hotter second fluid passes from one duct into the slowly rotating honeycomb wheel 60, gives up heat to the wheel as it passes through it and then continues as cooled second fluid flowing through the second duct downstream of the wheel 60. Thus, each of the faces 63 and 64 of wheel 60 alternately function as inlet and outlet faces as wheel 60 rotates between the first and second fluids' flow paths, which faces 63 and 64 are facing the fluid flow directions from and to the ducts. Wheel 60 also constitutes the filter with thin cell walls 65 defining two sets of alternate cells—cells 66.open at face 63 and the other cells closed adjacent face 63 by plugs 67. A reverse arrangement exists at and adjacent face 64.

Heat recovery wheel 60 is typically employed for recycling heat from a second fluid which is an exhaust gas of a combustion system, such as an internal combustion engine system or an industrial furnace system. By the last mentioned embodiment of the present invention, the filter heat recovery wheel 60 will remove particulates entrained in the second fluid. Then, as the wheel 60 rotates a sector of the wheel from the second fluid flow path to the first fluid flow path, air for the combustion system passes through the same sector of wheel 60, but in a direction opposite of the second fluid, to pick up heat from it (thereby becoming preheated air) and to blow the particulates collected in such sector of wheel 60 back through the combustion system to be oxidized into gaseous species or a smaller particulate form. Moreover, the filter wheel 60 may also serve to filter particulates from incoming air and to exhaust such accumulated particulates with cooled exhaust gas from the combustion system.

A series of foamable particulate ceramic cement samples according to this invention were prepared by thoroughly mixing the batch materials as shown in Table 10 to form pastes of those samples.

The analytical molar composition of the combined raw base materials of clay, silica and MnCO for Sample 1—4 and 6 was 1.84 $MnO \cdot 2.04\ Al_2O_3 \cdot 5.11\ SiO_2$. Such composition for sample 5 was 2.36 $MnO \cdot 1.29\ Al_2O_3 \cdot 5.35\ SiO_2$.

## TABLE 10
### Batch compositions—weight % of total ceramic materials (excluding SiC)

| Batch materials[a] | Samples | | | | | |
|---|---|---|---|---|---|---|
| | 1 | 2 | 3 | 4 | 5 | 6 |
| Georgia-Kaolin Kaopaque 10 clay (APS 10) | 60.77 | 57.57 | 51.17 | 38.38 | 25.04 | 57.57 |
| Penn. glass sand minusil silica (APS 5) | 7.43 | 7.04 | 6.26 | 4.69 | 12.57 | 7.04 |
| Baker reagent $MnCO_3$ powder | 26.80 | 25.39 | 22.57 | 16.93 | 22.39 | 25.39 |
| Mn-Mg cordierite grog (95 wt.% −200 U.S. Std mesh (75 μm)) | 5.0 | 10.0 | 20.0 | 40.0 | 40.0 | 10.0 |
| Norton RA 600 SiC (600 grit) | 1.96 | 1.91 | 1.80 | 1.60 | 1.60 | 1.0 |
| Methyl cellulose binder/plasticizer | 2.4 | 2.3 | 2.0 | 1.5 | 1.5 | 2.0 |
| Distilled water plasticizer[c] | | | 50—100 | | | |
| Foaming temperature—°C | 1170 | 1185 | 1210 | 1250 | 1250 | 1185 |
| Coefficient of thermal expansion×$10^{-7}$/°C[b] | — | 19.6 | 17.2 | 17.7 | 27.3 | 17.7 |

[a]APS means average particle size in micrometers.
[b]Over 25—1000°C
[c]Amounts varied among different trials of each Sample to provide different cement viscosities suitable for each cementing trial.

The Mn-Mg cordierite grog in the cement batches in Table 10 was a dense cordierite containing manganese of the present invention. In particular, the grog was made of the following batch composition (in weight % of the total ceramic batch materials):

| | |
|---|---|
| Mg Cordierite grog (95% −200 U.S. Std mesh (75μm)) | 84.48 |
| Georgia-Kaolin Kaopaque 10 clay (APS 10) | 10.00 |
| Baker reagent $MnCO_3$ powder | 4.15 |
| Penn. glass sand minusil silica (APS 5) | 0.78 |
| Pfizer MP 96—28 talc (APS 20) | 0.59 |
| Methyl cellulose binder/plasticizer | 4.0 |
| Alkali stearate extrusion aid | 0.5 |
| Distilled water plasticizer | 26.0 |

This Mn-Mg cordierite grog was fired generally in accordance with the following firing schedule:
80°C to 1405°C within about 60 hours.
Hold about 10 hours at 1405°C.
Cool 1405°C to room temperature within about 24 hours.

The Mg cordierite grog (in the batch for the Mn-Mg cordierite grog) was made of the following batch composition (in weight % of the total ceramic batch materials):

| | |
|---|---|
| Georgia-Kaolin hydrite MP clay (APS 9.7) | 25.15 |
| Georgia-Kaolin glomax LL clay (APS 1.9) | 21.17 |
| Pfizer MP 96—28 talc (APS 20) | 40.21 |
| Alcoa A-2 alumina (APS 5.8) | 13.47 |
| Methyl cellulose binder/plasticizer | 4.0 |
| Alkali stearate extrusion aid | 0.5 |
| Distilled water plasticizer | 32.5 |

This Mg cordierite grog was fired generally in accordance with the same firing schedule as for the Mn-Mg cordierite grog, except that the maximum temperature was 1425°C.

The analytical molar composition of Mn-Mg cordierite grog was $2.03\ RO \cdot 20.4\ Al_2O_3 \cdot 4.92\ SiO_2$ wherein RO consisted of 9.7 mole % MnO and 90.3 mole % MgO.

Pieces of ceramic honeycomb monolith were extruded in accordance with U.S.A. Patents 3,790,654 and 3,919,384 from the same batch composition as described for the Mn-Mg cordierite grog. Those extruded green honeycomb bodies were then fired in the manner as disclosed in U.S.A. Patent 3,899,326 and in accordance with the same firing schedule as described for the Mn-Mg cordierite grog. A series of pairs of these honeycomb pieces were cemented together by applying the sample pastes described in Table 10 to the cordierite surfaces of these pieces that were to be joined and then pressing those paste-coated surfaces together. These assembled pairs of cemented pieces were dried in air at least 22—75°C, then fired at about 300°C/hr. to the foaming temperature set forth in Table 1, held at the foaming temperature for about one hour and thereafter cooled at furnace rate to at least 200°C, at which time the foam cemented pieces were removed from the furnace for further cooling in ambient air atmosphere. The coefficients of thermal expansion (CTE) of the foamed cement samples are set forth in Table 10, which are closely similar to the typical CTE of $18 \times 10^{-7}$/°C (25—1000°C) for the pieces except the CTE of Sample 5.

All of those sintered foamed cement samples had a substantially wholly cordierite crystal structure.

Upon subjecting the foam cemented pieces to a cycling thermal shock test of 50 cycles of heating from 250°C to 800°C in 3 minutes and then cooling back to 250°C in 3 minutes, the foam cemented pieces with cement Samples 1—4 and 6 showed good resistance to thermal shock whereas the foam cemented pieces with cement Sample 5 showed moderate resistance to thermal shock. However, cement Sample 5 should serve well with pieces having CTE more closely similar to the CTE of foamed Sample 5 so as to exhibit good resistance to thermal shock.

Foamable cement Sample 6 has also been used to plug the end portions of cells in extruded ceramic honeycomb bodies made of the same and similar compositions and fired in the same manner as the Mg cordierite grog previously described. In those cases, the Mn-Mg cordierite grog was 95 wt.% — 325 U.S. Std. mesh (45 μm), and the cement batch was formed with 2.0 wt.% methyl cellulose and 70.0 wt.% water to provide a paste that was injected into the cell ends, between the surfaces of opposed cell walls, by means of an air pressure operated sealant or caulking gun with an appropriately shaped nozzle. Those bodies with the green plugs were then fired generally in accordance with the following typical firing schedule:

Room temperature to 1210°C within about 6 hours.

Hold about 30 minutes at 1210°C.

Cool 1210°C to room temperature within about 18 hours. The cement foamed during firing to develop a sintered cordierite mass having good sealing to the cell walls and being generally impervious to fluids.

The particle sizes of cordierite grog and SiC or other foaming agent in the cement can be varied as desired. For example, the grog may be as coarse as −20 U.S. Std. mesh (850 μm).

## Claims

1. Apparatus for filtering solid particulates from suspension in fluid streams, which comprises a filter of honeycomb structure having a matrix of thin porous walls defining a plurality of cells extending longitudinally and mutually parallel therethrough between inlet and outlet end faces of the structure, the walls containing substantially uniform interconnected open porosity of a volume and size sufficient to enable the fluid to flow completely through the walls and to restrain most or all of the particulates from passing completely through the walls, the transverse cross-sectional shapes of the cells forming a substantially uniformly repeating pattern of geometric shapes without interior corner angles of less than 30°, an inlet group of the cells open at the inlet end face and closed adjacent to the outlet end face, an outlet group of the cells closed adjacent to the inlet end face and open at the outlet end face, each cell of the inlet group sharing cell walls only with cells of the outlet group, and each cell of the outlet group sharing cell walls only with cells of the inlet group, characterized in that the volume of open porosity and the mean diameter of the pores forming the open porosity lie within the area defined by the boundary lines connecting points in a graph in which the abscissa is mean pore diameter in micrometres and the ordinate is percentage open porosity, the points having the coordinates (1, 58.5), (20, 33.0), (20, 52.5) and (1, 90.0).

2. Apparatus as claimed in claim 1, wherein the walls within each transverse sector of the structure have substantially uniform thickness.

3. Apparatus as claimed in claim 1, wherein the walls throughout the structure have a substantially uniform thickness.

4. Apparatus as claimed in any preceding claim, wherein the transverse cross-sectional geometric shapes of the cells are of quadrilateral, triangular, or square configuration.

5. Apparatus as claimed in claim 1, wherein the walls are not greater than about 1.5 mm thick, and the structure has a transverse cross-sectional cell density of at least about 1.5 cells/cm$^2$.

6. Apparatus as claimed in claim 5, wherein the walls are not greater than about 0.635 mm thick.

7. Apparatus as claimed in claim 5 or 6, wherein the open porosity is at least about 35% by volume and the mean pore diameter is at least about 3.5 μm.

8. Apparatus as claimed in claim 7, wherein the cell density is at least about 7.75 cells/cm$^2$.

9. Apparatus as claimed in claim 8, wherein the geometric shapes of the cells are either square or triangles.

10. Apparatus as claimed in any preceding claim, wherein the volume of open porosity and the mean diameter of the pores forming the open porosity lie with the area defined by the boundary lines connecting points in the said graph having coordinates (1, 58.5), (15, 39.5), (15, 62.0) and (1, 90.0).

11. Apparatus as claimed in any preceding claim, wherein the walls have a thickness in the range of about 0.05—1.27 mm and the cell density is in the range of about 2—93 cells/cm$^2$.

12. Apparatus as claimed in claim 11, wherein the walls are not less than about 0.3 mm thick.

13. Apparatus as claimed in any one of the preceding claims, used as part of a diesel engine exhaust gas system, interposed across the exhaust gas path, with the inlet face of the filter facing upstream of the gas path.

14. Apparatus as claimed in claim 13, dispersed in a housing through which passes the exhaust gas path.

15. Apparatus as claimed in any one of claims 1 to 12, used in a molten metal filtration chamber comprising a first portion for containing unfiltered molten metal, a second portion for containing filtered molten metal, a passage for flow of the molten metal from the first portion to the second portion, and the passage containing the filter interposed across the molten metal flow path through the passage with the inlet end face of the filter facing upstream of the molten metal flow path.

16. Apparatus as claimed in any one of claims 1 to 12, used in a heat exchange assembly comprising a heat exchange chamber having two separate fluid flow paths therethrough, a pair of ducts for passing hotter first fluid to and carrying cooled first fluid from one fluid flow path, a pair of ducts for passing cooler second fluid to and carrying heated second fluid from the other fluid flow path, a heat exchange wheel interposed and rotatable across the two fluid flow paths within the chamber, and the wheel comprising the filter with the inlet and outlet faces thereof facing the fluid flow directions from and to the ducts.

17. Apparatus as claimed in any one of the preceding claims, wherein the filter is fabricated of ceramic material.

18. Apparatus according to any preceding claim, wherein the cells are closed by use of a foamable particulate ceramic cement capable of forming a sintered cordierite foamed ceramic mass, the cement consisting essentially, by weight, of:

1—40% cordierite grog,

99—60% ceramic base material and an effective amount of a foaming agent to effect foaming of the cement upon firing to produce the foamed ceramic mass, the base material being raw ceramic material that has an analytical molar composition consisting essentially of about: $1.7—2.4\ MO \cdot 1.2—2.4\ Al_2O_3 \cdot 4.5—5.4\ SiO_2$ wherein MO comprises, as mole % of MO, about 0—55% MgO and at least 45% MnO, and the grog being ceramic material that has been previously fired and comminuted, and that has an analytical molar composition consisting essentially of about: $1.7—2.4\ RO \cdot 1.9—2.4\ Al_2O_3 \cdot 4.5—5.2\ SiO_2$ wherein RO comprises, as mole % of RO, MnO in amount of 0% up to a mole % that is about 20 mole % lower than the mole % of MO that is MnO and the balance is substantially MgO.

19. Apparatus as claimed in claim 18, wherein the foaming agent is SiC in an amount of at least 0.25% and up to about 5% by weight of grog plus base material.

20. Apparatus as claimed in claim 19, wherein the grog is at least 5 wt% and the base material is not more than 95 wt.%.

21. Apparatus as claimed in claim 19, wherein the analytical molar composition of the base material is about: $1.7—2.4\ MO \cdot 1.9—2.4\ Al_2O_3 \cdot 4.5—5.2\ SiO_2$ the grog is 5—20 wt%, the base material is 95—80 wt%, SiC is at least 1 wt% and MO comprises not more than about 15 mole % MgO.

22. Apparatus as claimed in claim 21, wherein the analytical molar composition of the grog is about: $1.8—2.1\ RO \cdot 1.9—2.1\ Al_2O_3 \cdot 4.9—5.2\ SiO_2$, wherein RO comprises 8—12 mole % MnO and the balance MgO, and SiC is not more than 2 wt%.

23. Apparatus as claimed in claim 22, wherein the analytical molar composition of the base material is about: $1.8—2.1\ MgO \cdot 1.9—2.1\ Al_2O_3 \cdot 4.9—5.2\ SiO_2$, and MO is wholly MnO.

## Patentansprüche

1. Vorrichtung zum Filtern fester Partikel aus einer Suspension in Fluidströmen, bestehend aus einem Filter mit einem Wabenaufbau, der eine Matrix aus dünnen porösen Wandungen besitzt, die zahlreiche Zellen begrenzen, welche sich in Längsrichtung und wechselseitig parallel durch diese zwischen einer Einlaß- und einer Auslaßendfläche des Aufbaues erstrecken, wobei die Wandungen eine im wesentlichen gleichförmige verbundene offene Porösität eines Volumens und einer Größe aufweisen, die für ein vollständiges Durchströmen des Fluids durch die Wandungen und für das Abhalten der meisten oder aller Teilchen von dem vollständigen Durchtritt durch die Wandungen ausreicht, und wobei die querverlaufenden Querschnittsformen der Zellen ein im wesentlichen sich gleichförmig wiederholendes Muster geometrischer Formen ohne Inneneckwinkel von weniger als 30° bilden, einer Einlaßgruppe von an der Einlaßendfläche offenen und nahe der Auslaßendfläche geschlossenen Zellen, und aus einer Auslaßgruppe von nahe der Einlaßendfläche geschlossenen und an der Auslaßendfläche offenen Zellen, wobei jede Zelle der Einlaßgruppe nur mit Zellen der Auslaßgruppe Wände gemeinsam aufweist, und wobei jede Zelle der Auslaßgruppe nur Wände mit den Zellen der Einlaßgruppe gemeinsam besitzt, dadurch gekennzeichnet, daß das Volumen der offenen Porösität und der mittlere Durchmesser der Poren, die die offene Porösität bilden, innerhalb der Fläche liegen, die in einer graphischen Darstellung, bei der die Abszisse den mittleren Porendurchmesser in Mirometern und die Ordinate der Prozentsatz der Porösität darstellen, durch Punkte verbindende Grenzlinien definiert ist, wobei die Punkte die Koordinaten (1; 58,5), (20; 33,0), (20; 52,5) und (1; 90,0) aufweisen.

2. Vorrichtung nach Anspruch 1, dadurch gekennzeichnet, daß die Wandungen innerhalb jedes querlaufenden Abschnitts des Aufbaues im wesentlichen eine gleichförmige Dicke aufweisen.

3. Vorrichtung nach Anspruch 1, dadurch gekennzeichnet, daß die Wandungen durch den Aufbau hindurch eine im wesentlichen gleichförmige Dicke besitzen.

4. Vorrichtung nach einem vorangehenden Anspruch, dadurch gekennzeichnet, daß die querverlaufenden geometrischen Querschnittsformen der Zelle eine viereckige, dreieckige oder quadratische Gestaltung aufweisen.

5. Vorrichtung nach Anspruch 1, dadurch gekennzeichnet, daß die Wände nicht mehr als etwa 1,5 mm dick sind, und daß der Aufbau eine querverlaufende Querschnittszellendichte von wenigstens etwa 1,5 Zellen/cm³ besitzt.

6. Vorrichtung nach Anspruch 5, dadurch gekennzeichnet, daß die Wände nicht mehr als etwa 0,635 mm dick sind.

7. Vorrichtung nach Anspruch 5 oder 6, dadurch gekennzeichnet, daß die offene Porösität wenigstens etwa 35 Volumen % beträgt, und daß der mittlere Porendurchmesser wenigsten etwa 3,5 µm ist.

8. Vorrichtung nach Anspruch 7, dadurch gekennzeichnet, daß die Zellendichte wenigsten etwa 7,75 Zellen/mc² beträgt.

9. Vorrichtung nach Anspruch 8, dadurch gekennzeichnet, daß die geometrischen Formen der Zellen entweder quadratisch oder dreieckig sind.

10. Vorrichtung nach einem vorangehenden Anspruch, dadurch gekennzeichnet, daß das Volumen der offenen Porösität und der mittlere Durchmesser der Poren, die die offene Porösität bilden, innerhalb der Fläche liegen, die durch die Grenzlinien gebildet wird, die in der graphischen Darstellung Punkte mit den Koordinaten (1; 58,5), (15; 39,5), (15; 62,0) und (1; 90,0) besitzen.

11. Vorrichtung nach einem vorangehenden Anspruch, dadurch gekennzeichnet, daß die Wände eine Dicke im Bereich von etwa 0,05—1,27 mm besitzen, und daß die Zelldichte in dem Bereich von etwa 2—93 Zellen/cm$^3$ liegt.

12. Vorrichtung nach Anspruch 11, dadurch gekennzeichnet, daß die Wandungen nicht weniger als etwa 0,3 mm dick sind.

13. Vorrichtung nach einem der vorangehenden Ansprüche, gekennzeichnet durch, die Verwendung als Teil eines Dieselmotor-Auspuffsystems, das quer zum Auspuffweg zwischengeschaltet ist, wobei die Einlaßfläche des Filters zur stromaufwärtigen Seite des Abgaswegs weist.

14. Vorrichtung nach Anspruch 13, gekennzeichnet durch eine Ausbreitung in einem Gehäuse, durch das der Abgasweg hindurchtritt.

15. Vorrichtung nach einem der Ansprüche 1—12, gekennzeichnet durch die Verwendung in einer Filtrierkammer für geschmolzenes Metall, bestehend aus einem ersten Abschnitt zur Aufnahme von ungefiltertem geschmolzenen Metall, einen zweiten Abschnitt zur Aufnahme von gefilterten geschmolzenen Metall, einem Kanal für die Strömung des geschmolzenen Metalls aus dem ersten Abschnitt zu dem zweiten Abschnitt, und aus dem Kanal, der den Filter enthält, welcher quer zu dem Strömungsweg des geschmolzenen Metalls durch den Kanal zwischengeschaltet ist, wobei die Einlaßendfläche des Filters stromaufwärts des Strömungswegs des geschmolzenen Metalls weist.

16. Vorrichtung nach einem der Ansprüche 1—12, gekennzeichnet durch die Verwendung in einer Wärmetauscheranordnung, bestehend aus einer Wärmetauscherkammer mit zwei separaten Fluidströmungswegen durch diese, einem Leitungspaar zum Durchleiten eines heißeren ersten Fluids zu und zum Transportieren von abgekühltem ersten Fluid von einem Fluidströmungsweg, einem Leitungspaar zum Durchleiten eines kühlen sekundären Fluids zu und zum Transportieren eines erhitzen zweiten Fluids von dem anderen Fluidströmungsweg, einem Wärmetauscherrad, das zwischengeschaltet ist und quer zu den beiden Strömungswegen innerhalb der Kammer drehbar ist, und wobei das Rad den Filter aufweist, dessen Einlaß- und Auslaßflächen auf die Fluidströmungsrichtungen von und zu den Leitungen weisen.

17. Vorrichtung nach einem der vorangehenden Ansprüche, dadurch gekennzeichnet, daß der Filter aus keramischem Material· hergestellt ist.

18. Vorrichtung nach einem vorangehenden Anspruch, dadurch gekennzeichnet, daß die Zellen durch Verwendung eines schäumbaren Keramikpartikelzement geschlossen sind, der eine gesinterte aufgeschäumte keramische Cordieritmasse zu bilden vermag, wobei der Zement im wesentlichen in Gewichtsprozent besteht aus:

1—40% Cordierit-Ziegelmehl,

99—60% keramischem Grundmaterial und einer wirkungsvollen Menge eines Schaummittels zum Aufschäumen des Zements beim Brennen zur Erzeugung der aufgeschäumten keramischen Masse, wobei das Grundmaterial aus rohem keramischen Material besteht, das eine analytische molare Zusammensetzung aufweist, die sich im wesentlichen zusammensetzt aus etwa $1,7$—$2,4$ MO $\cdot$ $1,2$—$2,4$ Al$_2$O$_3$ $\cdot$ $4,5$—$5,4$ SiO$_2$, wobei MO als Molprozent von MO etwa 0—55% MgO und wenigstens 45% MnO aufweist, und wobei das Ziegelmehl aus keramischem Material besteht, das zuvor gebrannt und feingemahlen ist und das eine analytische Molzusammensetzung besitzt, die im wesentlichen besteht aus etwa $1,7$—$2,4$ RO $\cdot$ $1,9$—$2,4$ Al$_2$O$_3$ $\cdot$ $4,5$—$5,2$ SiO$_2$, wobei RO in Molprozent von RO MnO in einem Betrag von etwa 0% bis zu 1 Mol % besitzt, daß heißt etwa 20 Mol % weniger als das Mol % von MO, d.h. MnO, und wobei das Gleichgewicht im wesentlichen aus· MgO besteht.

19. Vorrichtung nach Anspruch 18, dadurch gekennzeichnet, daß das Schaummittel SiC in einer Menge von wenigstens 0,25 bis zu etwa 5 Gew.% des Ziegelmehls zuzüglich des Grundmaterials vorliegt.

20. Vorrichtung nach Anspruch 19, dadurch gekennzeichnet, daß das Ziegelmehl wenigstens 5 Gew.% und das Grundmaterial nicht mehr als 95 Gew.% betragen.

21. Vorrichtung nach Anspruch 19, dadurch gekennzeichnet, daß die analytische Molzusammensetzung des Grundmaterials etwa $1,7$—$2,4$ MO $\cdot$ $1,9$—$2,4$ Al$_2$O$_3$ $\cdot$ $4,5$—$5,2$ SiO$_2$ beträgt, daß das Ziegelmehl 5—20 Gew.% ausmacht, daß das Grundmaterial 95—80 Gew.% beträgt, daß SiC wenigstens bei 1 Gew.% liegt und daß MO nicht mehr als etwa 15 Mol % MgO aufweist.

22. Vorrichtung nach Anspruch 21, dadurch gekennzeichnet, daß die analytische Molzusammensetzung des Ziegelmehls etwa $1,8$—$2,1$ RO $\cdot$ $1,9$—$2,1$ Al$_2$O$_3$ $\cdot$ $4,9$—$5,2$ SiO$_2$ beträgt, wobei RO 8—12 Mol % MnO und das MgO-Gleichgewicht besitzt, und wobei SiC nicht mehr als 2 Gew.% beträgt.

23. Vorrichtung nach Anspruch 22, dadurch gekennzeichnet, daß die analytische Molzusammensetzung des Grundmaterials etwa $1,8$—$2,1$ MgO $\cdot$ $1,9$—$2,1$ Al$_2$O$_3$ $\cdot$ $4,9$—$5,2$ SiO$_2$ beträgt, und daß das MO vollständig aus MnO besteht.

**Revendications**

1. Dispositif pour la filtration de substances particulaires solides en suspension dans des courants de

# 0 043 694

fluides, qui comprend un filtre à structure en nid d'abeilles comportant une matrice de parois poreuses minces délimitant une multiplicité de cellules traversant longitudinalement celle-ci en parallèlisme mutuel entre des faces terminales d'entrée et de sortie de la structure, les parois présentant une porosité ouverte à pores communicants sensiblement uniforme dont le volume et les dimensions sont suffisants pour permettre au fluide de traverser complètement les parois et pour empêcher la plupart ou la totalité des substances particulaires de traverser complètement les parois, les formes de section transversale des cellules formant un motif à peu près uniformément répétitif de formes géométriques dépourvues d'angles d'arêtes intérieures de moins de 30°, un groupe d'entrée des cellules étant ouvertes à la face terminale d'entrée et fermées au voisinage de la face terminale de sortie, un groupe de sortie des cellules étant fermées au voisinage de la face terminale d'entrée et ouvertes à la face terminale de sortie, chaque cellule du groupe d'entrée n'ayant en commun des parois de cellules qu'avec des cellules du groupe de sortie, et chaque cellule du groupe de sortie n'ayant en commun des parois de cellules qu'avec des cellules du groupe d'entrée, caractérisé en ce que le volume de porosité ouverte et le diamètre moyen des pores formant la porosité ouverte se trouvent en-dedans de la surface délimitée par les lignes frontières qui, sur un graphe dans lequel sont portés en abscisses le diamètre moyen des pores en micromètres et en ordonnées le taux de porosité ouverte, relient les points ayant pour coordonnées (1, 58,5), (20, 33,0), (20, 52,5) et (1, 90,0).

2. Dispositif selon la revendication 1, dans lequel les parois se trouvant dans chaque secteur transversal de la structure ont une épaisseur sensiblement uniforme.

3. Dispositif selon la revendication 1, dans lequel les parois ont une épaisseur sensiblement uniforme dans toute la structure.

4. Dispositif selon l'une quelconque des revendications précédentes, dans lequel les formes géométriques en coupe transversale des cellules sont à configuration en quadrilatère, triangulaire ou carrée.

5. Dispositif selon la revendication 1, dans lequel l'épaisseur des parois ne dépasse pas environ 1,5 mm, et la structure présente en section transversale une densité en cellules d'au moins environ 1,5 cellules/cm$^2$.

6. Dispositif selon la revendication 5, dans lequel l'épaisseur des parois ne dépasse pas environ 0,635 mm.

7. Dispositif selon la revendication 5 ou 6, dans lequel la porosité ouverte est d'au moins 35% en volume et le diamètre moyen des pores est d'au moins environ 3,5 µm.

8. Dispositif selon la revendication 7, dans lequel la densité en cellules est d'au moins 7,75 cellules/cm$^2$.

9. Dispositif selon la revendication 8, dans lequel les formes géométriques des cellules sont soit carrées, soit triangulaires.

10. Dispositif selon l'une quelconque des revendications précédentes, dans lequel le volume de porosité ouverte et le diamètre moyen des pores formant la porosité ouverte sont compris dans la surface délimitée par les lignes frontières qui, sur le graphe précité, relient les points ayant pour coordonnées (1, 58,5), (15, 39,5), (15, 62,0) et (1, 90,0).

11. Dispositif selon l'une quelconque des revendications précédentes, dans lequel les parois ont une épaisseur comprise entre environ 0,05 et 1,27 mm et la densité en cellules est comprise entre environ 2 et 93 cellules/cm$^2$.

12. Dispositif selon la revendication 11, dans lequel l'épaisseur des parois ne dépasse pas environ 0,3 mm.

13. Dispositif selon l'une quelconque des revendications précédentes, utilisé comme constituant d'un système pour gaz d'échappement de moteur diesel, intercalé sur le trajet des gaz d'échappement, la face d'entrée du filtre étant tournée du côté amont du trajet des gaz.

14. Dispositif selon la revendication 13, disposé dans un boîtier par lequel passe le trajet de gaz d'échappement.

15. Dispositif selon l'une quelconque des revendications 1 à 12, utilisé dans une chambre de filtration de métaux fondus comprenant une première portion destinée à contenir du métal fondu non filtré, une deuxième portion destinée à contenir du métal fondu filtré, un passage pour l'écoulement du métal fondu de la première portion à la deuxième portion, le passage contenant le filtre intercalé sur le trajet d'écoulement du métal fondu traversant le passage de manière que la face terminale d'entrée du filtre se trouve du côté amont du trajet d'écoulement du métal fondu.

16. Dispositif selon l'une quelconque des revendications 1 à 12, utilisé dans un ensemble échangeur de chaleur comprenant une chambre d'échange de chaleur traversée par deux trajets d'écoulement de fluide distincts, une paire de conduits destinés à amener un premier fluide relativement chaud à l'un des trajets d'écoulements de fluide et à emporter de celui-ci du premier fluide refroidi, une paire de conduits destinés à amener un deuxième fluide relativement froid à l'autre trajet d'écoulement de fluide et à emporter de celui-ci du deuxième fluide échauffé, une roue d'échange de chaleur intercalée et rotative sur le parcours des deux trajets d'écoulement de fluide à l'intérieur de la chambre, la roue comprenant le filtre avec faces d'entrée et de sortie de celui-ci tournées dans les directions d'écoulement de fluide en provenance et à destination des conduits.

17. Dispositif selon l'une quelconque des revendications précédentes, dans lequel le filtre est formé de matériau céramique.

19

18. Dispositif selon l'une quelconque des revendications précédentes, dans lequel les cellules sont fermées par utilisation d'un ciment céramique en particules expansibles propre à former une masse de céramique cellulaire de cordiérite frittée, le ciment étant essentiellement formé, en poids, de:

— 1 à 40% de chamotte de cordiérite,
— 99 à 60% de matériau de base de céramique et d'une quantité efficace d'un agent porogène destiné à opérer le moussage du ciment à la cuisson pour fournir la masse céramique cellulaire, le matériau de base étant une matière céramique brute dont la composition molaire analytique est essentiellement formée d'environ: 1,7 à 2,4 MO · 1,2 à 2,4 $Al_2O_3$ · 4,5 à 5,4 $SiO_2$, MO comprenant, en moles % de MO, environ 0 à 55% de MgO et au moins 45% de MnO, et la chamotte étant une matière céramique qui a été préalablement cuite et broyée, et dont la composition molaire analytique est essentiellement formée d'environ: 1,7 à 2,4 RO · 1,9 à 2,4 $Al_2O_3$ · 4,5 à 5,2 $SiO_2$, RO comprenant, en moles % de RO, une quantité de MnO allant de 0% jusqu'à une proportion molaire inférieure d'environ 20 moles % à la proportion molaire de MO formée de MnO, le complément à 100% étant pratiquement formé de MgO.

19. Dispositif selon la revendication 18, dans lequel l'agent porogène est du SiC en une proportion d'au moins 0,25% et pouvant aller jusqu'à environ 5% du poids total de la chamotte et du matériau de base.

20. Dispositif selon la revendication 19, dans lequel la chamotte représente au moins 5% en poids et le matériau de base ne représente pas plus de 95% en poids.

21. Dispositif selon la revendication 19, dans lequel la composition molaire analytique du matériau de base est d'environ: 1,7 à 2,4 MO · 1,9 à 2,4 $Al_2O_3$ · 4,5 à 5,2 $SiO_2$, la chamotte représente 5 à 20% en poids, le matériau de base représente 95 à 80% en poids, SiC représente au moins 1% en poids et MO ne comprend pas plus d'environ 15 moles % de MgO.

22. Dispositif selon la revendication 21, dans lequel la composition molaire analytique de la chamotte est d'environ: 1,8 à 2,1 RO · 1,9 à 2,1 $Al_2O_3$ · 4,9 à 5,2 $SiO_2$, RO comprenant 8 à 12 moles % de MnO et du MgO pour le complément, et SiC ne représentant pas plus de 2% en poids.

23. Dispositif selon la revendication 22, dans lequel la composition molaire analytique du matériau de base est d'environ: 1,8 à 2,1 MgO · 1,9 à 2,1 $Al_2O_3$ · 4,9 à 5,2 $SiO_2$, MO étant entièrement formé par du MnO.

*Fig. 1*

*Fig. 2*

Fig. 3

Fig. 4

Fig. 5

Fig. 6

Fig. 7

Fig. 8

Fig. 9

COOLER FIRST
FLUID IN
FLOW

HEATED FIRST
FLUID OUT
FLOW

COOLED SECOND
FLUID OUT FLOW

HOTTER SECOND
FLUID IN FLOW

Fig. 10

4